# EUROPEAN PATENT APPLICATION

(11) **EP 0 933 667 A2**
(43) Date of publication of application: **04.08.1999**
(21) Application number: 99100756.8
(22) Date of filing: 16.01.1999
(51) Int. Cl.: G03B 17/02

(54) **Lens-fitted film unit**

(30) Priority: 29.01.1998 JP 1697398; 27.07.1998 JP 21059998
(71) Applicant: KONICA CORPORATION, Tokyo (JP)
(72) Inventor: Sugiyama, Nobuaki, Hino-shi, Tokyo (JP)
(74) Representative: Türk, Gille, Hrabal

(57) **Abstract**

In a single use camera, provided with a main body; a photographic film which is preliminary incorporated in the main body; a photographing unit comprising a photographing lens and a shutter, the photographing unit incorporated in the main body; and an external member pasted on at least a part of an external surface of the main body, the external member is pasted with an adhesive which is an acrylic adhesive and has an adhesive strength of 600 to 1100 g/25 mm.

## Description

### BACKGROUND OF THE INVENTION

The present invention relates to a single use camera or a lens-fitted film unit in which an external member is pasted on a main body (a cover member) forming an external surface of the lens-fitted film unit.

A conventional lens-fitted film unit comprises a first member and a second member as the main body forming an external surface of the lens-fitted film unit, for example, a main unit supporting a photographing unit comprising a lens and a shutter is incorporated in a main body comprising a front cover and a back cover. Further, in this type of the lens-fitted film unit, the main body is covered with an external member made of a paper or a resin. The external member made of a paper or a resin is arranged to cover ugly portions of the front cover and the back cover from a view of an external appearance and a brand name and a simple instruction for operation are printed on the external member.

Incidentally, a manufacturer collects the lens-fitted film unit which is sent from a user to a photofinisher for development after it was used for photographing and recycles it for reuse. If the material of the front cover and the back cover is different from that of the external member in the conventional lens-fitted film unit, for example, if the front cover and the back cover are made of a resin and the external member is made of a paper or resin, the front cover, the back cover and the external member can be simultaneously pulverized at the time of recycling. Accordingly, it is necessary to peel off the external member from the front cover and the back cover. However, since adhesive used conventionally is a type having a strong adhesion, peeling the external member takes a large number of processes. Further, in the case that the front cover and the back cover are recycled after the external member was peeled off without being pulverized, a large number of processes are needed in order to peel off the external member.

Further, in a production process other than the abovementioned recycling, there may be a case that the external member once pasted needs to be peeled off when it was found that some defects exist on the main body. In such a case, since adhesive used conventionally is also a type having a strong adhesion, peeling the external member takes a large number of processes.

The strong adhesion type adhesive used conventionally has a adhesive strength of 1500 to 1700 g/25 mm (JIS Z-0237 180° Peel Method). Although the external member does not float from the main body after the external member was pasted on the main body, it may be difficult to peel off the external member. If some troubles take place, for example, if the external member tears when it is peeled off, a large number of additional processes and costs are needed. As a condition that the adhesive allows the pasted external member to be peeled off, it was studied the pasted external member could be peeled off at any time and the adhesive would not remain on the main body. In order to avoid the adhesive remaining on the main body, it is necessary to make the adhesive strength week. However, the adhesive having a week adhesive strength was prepared and examined, there was the problem that the pasted external member floated on a curved portion of the main body.

As a result of various examinations, it was learned that the adhesive allowing the pasted external member to be peeled off is requested not only to make it to be easily peeled off, but also requested to prohibit it not to be peeled while the lens-fitted film unit is under normal usage. Then, by making the adhesive strength within a predetermined range, it is possible to satisfy both of the above requests.

### SUMMARY OF THE INVENTION

The present invention was made in view of the above problems. In the present invention, the pasted external member is not peeled off from the main body wile the lens-fitted film unit is under normal usage, however, when some defects are found on the main body or when the main body is recycled, the pasted external member can be peeled off from the main body. Accordingly, an objective of the present invention is to provide a lens-fitted film unit with which a number of processes and costs can be reduced and an environmental problem can be solved by the peeling-off ability of the external member.

In order to solve the above problems and to attain the above objective, the lens-fitted film unit of the present invention is structured as follows:
A single use camera, comprising:
   a main body;
   a photographic film which is preliminary incorporated in the main body;
   a photographing unit comprising a photographing lens and a shutter, the photographing unit incorporated in the main body; and
   an external member pasted on at least a part of an external surface of the main body, wherein the external member is pasted with an adhesive which is an acrylic adhesive and has an adhesive strength of 600 to 1100 g/25 mm.
Futher, the above objective can be attained by the lens-fitted film unit of the present invention structured as follows as a prefereable embodiment:
   (1) In a lens-fitted film unit in which an external member covering a main body forming an external surface of the lens-fitted film unit is pasted on the main body, an adhesive making it possible to peel off the pasted external member is used and the adhesive is an acrylic adhesive and has an adhesive strength of 600 to 1100 g/25 mm.
      By the invention according to item (1), although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs. Further, in the case that the material of the external member is different from that of the main body, since the external member can be easily peeled off and the main body can be recycled, the environmental problems can be solved.
   (2) In a lens-fitted film unit in which an external member covering a main body forming an external surface of the lens-fitted film unit is pasted on the main body, the external member is made of polypropylene different from the material of the main body or is made of polystyrene same as that of the main body, an adhesive making it possible to peel off the pasted external member is used and the adhesive is an acrylic adhesive and has an adhesive strength of 600 to 1100 g/25 mm.
      By the invention according to item (2), either in the case that polypropylene different from the material of the main body is used as the material of the external member or in the case that polystyrene or other resin material same as that of the main body is used as the material of the external member, since an adhesive making it possible to peel off the pasted external member is used and the adhesive is an acrylic adhesive and has an adhesive strength of 600 to 1100 g/25 mm, although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs.

### BRIEF DESCRIPTION OF THE DRAWINGS

Fig. 1 is a perspective view of a lens-fitted film unit viewing from its front.
Figs. 2(a) and 2(b) are schematic views showing an engaging section between a front cover and a back cover.
Fig. 3 is a perspective view of a lens-fitted film unit viewing from its back.

### DETAILED DESCRIPTION OF THE PREFERRED EMBODIMENTS

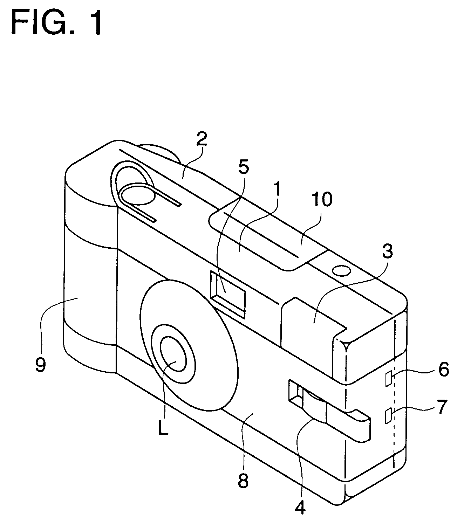

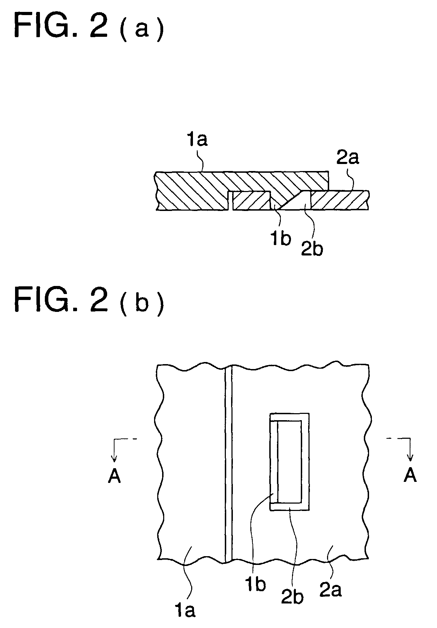

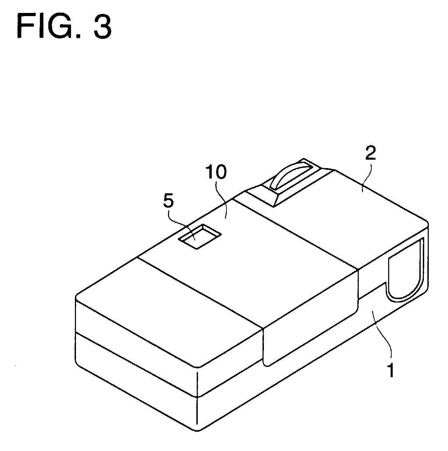

Hereinafter, an embodiment of a lens-fitted film unit of the present invention is explained with reference to drawings. Fig. 1 is a perspective view of a lens-fitted film unit viewing from its front. Figs. 2(a) and 2(b) are schematic views showing an engaging section between a front cover and a back cover. Fig. 3 is a perspective view of a lens-fitted film unit viewing from its back.

In the above drawings, numeral 1 represents a front cover constructing a first member, 2 represents a back cover constructing a second member, the front cover 1 and the back cover 2 are assembled so as to form a main body and these cover members cover internal mechanical members, thereby protecting them. Further, these cover member are structured so as to keep light-proof for film which is preliminary installed in the main body of these cover member. Likewise above, the front cover constructing the first member and the back cover constructing the second member form an external surface of the lens-fitted film unit. Further, L represents a photographing lens, 3 represents a strobe panel through which a strobe emits light, 4 represents a switch operating member which turns on an internal power source when it is operated to slide in the right direction, and 5 represents a finder window.

The front cover 1 and the back cover 2 are attached to an unillustrated main unit supporting internal mechanical members, or the front cover engages with the back cover, whereby they are assembled as the main body. At this stage, in order to make the assembling simpler and in order to make it possible to disassemble them easily for recycling, they are assembled with the construction shown in Fig. 2.

In Fig. 2, Fig. 2(a) is a A-A sectional view of Fig. 2(b) and Fig. 2(b) is a front view of the engaging section. In these drawings, 1a represents a side section of the front cover 1, 2a represents a side section of the back cover 2. An engaging claw 1b is provided on the side section 1a of the front cover 1, and an engaging claw 2b is provided on the side section 2a of the back cover 1, the engaging claw 1b engages with the engaging claw 2b, whereby the side section 1a of the front cover 1 and the side section 2a of the back cover 2 are supported with each other. Incidentally, Fig. 2 shows a configuration in which the engaging claw 1b of the front cover 1 engages with the engaging claw 2b of the back cover 2. However, it may be possible that an engaging hole is provided to the front cover 1 and an engaging claw is provided to the back cover 2. Further, it may be possible to construct as follows: One of the front cover 1 and the unillustrated main unit is provided with an engaging claw and the other one is provided with an engaging hole, and also one of the back cover 1 and the unillustrated main unit is provided with an engaging claw and the other one is provided with an engaging hole, whereby the front cover 1 and the back cover are mounted on the main unit.

With the above manner, when the front cover 1 and the back cover 2 are assembled so as to form a lens-fitted film unit, on four surfaces of the lens-fitted film unit, that is, on the top surface, the bottom surface, the right side surface and the left side surface, there may be no problem if the necessary smallest numbers of engaging sections are arranged with well balance. However, due to the reasons on the points of arrangement and design for the internal mechanical members, the engaging sections are not necessarily arranged with well balance and a problem actually take place such that an engaging section is not arranged on the bottom surface though the bottom surface has a long surface.

In Fig. 1, on the right side of the main body, the engaging sections 6 and 7 of the front cover 1 and the back cover 2 are provided. However, due to the arrangement of the unillustrated internal mechanical members, there may be the case that the engaging sections are not arranged on the right side with well balance. Further, there may be a case that the front cover 1 and the back cover 2 are sufficiently engaged on the bottom surface. In these cases, there may be a risk that the front cover 1 is disengaged from the back cover 2 at the lower section of the lens-fitted film unit due to shock. Still further, if the engaging sections 6 and 7 are exposed for the outside, since the appearance becomes ugly, it is necessary to cover them with an external member.

In the present invention, at the left side of the lens-fitted film unit, the sheet-like external member 8 made of a material different from that of the front cover 1 and the back cover 2 is pasted so as to cover the front cover 1 and the back cover 2 together with engaging sections 6 and 7. Also, the external member 9 is pasted so as to cover the right side of the lens-fitted film unit and the external member 10 is pasted so as to cover the top and bottom sides of the lens-fitted film unit. The external members 8, 9 and 10 have not only a function to provide a good appearance for the external figure, but also have a function to reinforce the engagement between the front cover 1 and the back cover 2, and a brand name and a simple instruction for operation are printed on them.

The front cover 1 and the back cover 2 are made of a resin, such as polystyrene, on the other hand, the external members are made of a resin different from that of the front cover 1 and the back cover 2 or paper. The pasting of the external members 8, 9 and 10 is conducted such that the external members 8, 9 and 10 are preliminary applied with adhesive and then pasted at predetermined positions on the lens-fitted film unit. As the adhesive, an acrylic adhesive is used.

More concretely, as the adhesive, an adhesive making it possible to peel off the external members 8, 9 and 10 is used. The adhesive strength of the adhesive is 600 to 1100 g/25 mm (JISZ-0237 180° Peel Method), preferably, 800 to 900 g/25 mm. If the adhesive strength is smaller than 600 g/25 mm, the external member tends to float from the main body. Accordingly, if the edge of the external member is rubbed with the other member in a bag under normal usage, a trouble that the edge is peeled up from the main body tends to take place. On the other hand, if the adhesive strength is larger than 1100 g/25 mm, when the external member is peeled off at the time of recycling, the external member is torn, resulting in difficulty to peel off the remaining external member. In contrast, by making the adhesive strength within a range of 600 to 1100 g/25 mm (JISZ-0237 180° Peel Method), preferably, 800 to 900 g/25 mm, although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs. Further, in the case that the material of the external member is different from that of the main body, since the external member can be separated by being easily peeled off and the main body can be recycled, the environmental problems can be solved.

Further, in the embodiment of the lens-fitted film unit, the external member is made of polypropylene and the other resins different from the material of the main body formed by the front cover 1 and the back cover 2 or is made of polystyrene and other resins same as that of the main body. With this manner, either in the case that the external member is made of polypropylene and the other resins different from the material of the main body formed by the front cover 1 and the back cover 2 or in the case that the external member is made of polystyrene and other resins same as that of the main body, since an adhesive making it possible to peel off the pasted external member is used and the adhesive is an acrylic adhesive and has an adhesive strength of 600 to 1100 g/25 mm, although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs.

The external member usually comprises a base material member (such as a film-like resin and paper) and an adhesive section. It may be preferable that the thickness of the base material member of the external member is 50 µm to 120 µm.In the case that the base material is polypropylene, it may be preferable that the thickness of the base material member is 60 µm to 100 µm, more preferable, 70 µm to 90 µm. In the case that the base material is polystyrene, it may be preferable that the thickness of the base material member is 50 µm to 80 µm, more preferable, 60 µm to 70 µm. It may be preferable that the thickness of the adhesive section before pasting is 20 µm to 30 µm. Further, in the case that it is possible to split the main body into a plurality of components such as the front cover, the back cover and so on, the external member may cover the boundary at which the plurality of components come to contact with each other, such as a part of or all of the boundary between the front cover and the back cover. However, the external member may not at all cover the boundary among the plurality of components.

Further, as a recycling method for a single use camera, the following two methods are typically considered. However, the recycling method is not limited to these methods.

In the first method, after the external member pasted on the external surface of the main body of the single use camera is peeled off, the main body from which the external member is peeled off is pulverized and melted. A new main body is manufactured by using the resin obtained by melting the pulverized main body, and then a single use camera is assembled with the main body manufactured by using the recycled resin.

In the second method, after the external member pasted on the external surface of the main body of the single use camera is peeled off, the main body from which the external member is peeled off is reused without being pulverized so that a single use camera is assembled. A new external member may be pasted on the main body before the single use camera is assembled, or the new external member may be pasted on the main body in the course or after the single use camera is assembled.

As stated above, by the invention according to item (1), since an adhesive making it possible to peel off the pasted external member is used and the adhesive is an acrylic adhesive and has an adhesive strength of 600 to 1100 g/25 mm, although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs. Further, in the case that the material of the external member is different from that of the main body, since the external member can be easily peeled off and the main body can be recycled, the environmental problems can be solved.

By the invention according to item (2), either in the case that polypropylene different from the material of the main body is used as the material of the external member or in the case that polystyrene or other resin material same as that of the main body is used as the material of the external member, since an adhesive making it possible to peel off the pasted external member is used and the adhesive is an acrylic adhesive and has an adhesive strength of 600 to 1100 g/25 mm, although the pasted external member is not peeled off from the main body forming the external surface of the lens-fitted film unit wile the lens-fitted film unit is under normal usage, when some defects are found on the main body or when the main body is recycled, the pasted external member can be easily peeled off from the main body, thereby reducing a number of processes and costs.

Disclosed embodiment can be varied by a skilled person without departing from the sprit and scope of the invention.

## Claims

1. A single use camera, comprising:
a main body;
a photographic film which is preliminary incorporated in the main body;
a photographing unit comprising a photographing lens and a shutter, the photographing unit incorporated in the main body; and
an external member pasted on at least a part of an external surface of the main body, wherein the external member is pasted with an adhesive which is an acrylic adhesive and has an adhesive strength of 600 to 1100 g/25 mm.

2. The single use camera of claim 1, wherein the adhesive strength is 800 to 900 g/25 mm.

3. The single use camera of claim 1, wherein the main body is made of a resin.

4. The single use camera of claim 1, wherein the external member is made of a material same as that of the main body.

5. The single use camera of claim 3, wherein the external member and the main body are made of polystyrene.

6. The single use camera of claim 1, wherein the external member is made of a material different from that of the main body.

7. The single use camera of claim 6, wherein the external member is made of polypropylene.

8. The single use camera of claim 1, wherein the main body is split into a plurality of components and the external member cover at least a part of a boundary at which a component and the other component come in contact with each other.

9. The single use camera of claim 1, wherein the main body is split into a plurality of components and the external member does not cover a boundary at which a component and the other component come in contact with each other.

10. The single use camera of claim 1, wherein the external member comprises a base material member and an adhesive section and the thickness of the base material member is 50 µm to 120 µm.

11. A method of manufacturing a single use camera, comprising steps of:
a step of peeling off an external member pasted on at least a part of a main body of the single use camera, the main body made of a resin;
a step of pulverizing and melting the main body from which the external member is peeled off;
a step of manufacturing a recycled main body by using a resin obtained by melting the pulverized main body; and
a step of assembling a single use camera by using the recycled main body;
wherein the external member is pasted on the main body with an adhesive which is an acrylic adhesive and has an adhesive strength of 600 to 1100 g/25 mm.

12. A method of manufacturing a single use camera, comprising steps of:
a step of peeling off an external member pasted on at least a part of a main body of the single use camera;
a step of assembling a single use camera by using the main body from which the old external member is peeled off; and
pasting a new external member on the main body from which the old external member is peeled off;
wherein the external member is pasted on the main body with an adhesive which is an acrylic adhesive and has an adhesive strength of 600 to 1100 g/25 mm.
